# EUROPÄISCHE PATENTSCHRIFT

(11) **EP 0 872 290 B1**
(45) Veröffentlichungstag und Bekanntmachung des Hinweises auf die Patenterteilung: **11.06.2003**
(21) Anmeldenummer: 98106313.4
(22) Anmeldetag: 07.04.1998
(51) Int. Cl.: B21B 38/02, G01L 5/04

(54) **Planheitsmessrolle**
Roller for measuring flatness
Rouleau de mesure de la planéité

(30) Priorität: 14.04.1997 DE 19715523
(43) Veröffentlichungstag der Anmeldung: 21.10.1998
(73) Patentinhaber: SMS Demag AG, 40237 Düsseldorf (DE)
(72) Erfinder: Kipping, Matthias, 57562 Herdorf (DE); Tuschhoff, Matthias, Dr., 57072 Siegen (DE); Braun, Martin, 57223 Kreuztal (DE); Sudau, Peter, 57271 Hilchenbach (DE); Löhr, Andreas, 57 562 Herdorf (DE)
(74) Vertreter: Valentin, Ekkehard, Dipl.-Ing.

(56) Entgegenhaltungen:
- EP-A- 0 344 583
- DE-A- 2 633 351
- DE-A- 4 031 666
- US-A- 3 581 536

## Beschreibung

Die Erfindung betrifft eine Planheitsmeßrolle, ausgebildet als ein gegen ein Walzband anstellbarer Schlingenheber mit mehreren, über die Breite des Walzbandes nebeneinanderliegenden Meßzonen, bestehend jeweils aus einer im Uhrzeigersinn verschwenkbaren, mit einer Kraftmeßeinrichtung zusammenwirkenden, drehbar gelagerten Meßrolle, wobei jede Meßrolle in einem verschwenkbaren, gehäuseartigen Hebelrahmen gelagert ist.

Eine solche Planheitsmeßrolle ist durch die US-A-3.581.536 bekanntgeworden. Diese besitzt allerdings eine aulwendige bzw. platzraubende Bauweise, wobei die in der Planheitsmeßrolle jeweils gemessene Kraft außerdem direkt auf den Boden übertragen wird.

Ein Schlingenheber als Stellglied zur Regelung des Bandzuges bei Bandwalzwerken ist durch die DE-C2 40 31 666 bekanntgeworden. Das Band soll dabei vorzugsweise zugfrei, d.h. mit einer Regelgröße von Null sein. Der als Stellglied zur Regelung des Bandzuges dienende Schlingenheber ist beispielsweise an der Auslaufseite eines Walzgerüstes angeordnet. Er besitzt über die Breite verteilt mehrere paarweise Meßschwingen, wobei jede Meßschwinge einerseits eine dem Band zugeordnete Meßrolle und andererseits ein Kraftmeßglied aufweist. Der Schlingenheber bzw. seine einzelnen Meßzonen sind im Prinzip wie eine Waage aufgebaut Jeweils zwei plattenartige, im Abstand parallel nebeneinanderliegende Meßschwingen nehmen eine Meßrolle auf und besitzen ein mit einer Leitplatte verschraubtes Schwenklager. Vertikal unterhalb des Schwenklagers ist außerdem noch eine Drehachse für einen Höhenkorrekturarm angeordnet; dieser wird mehreren Schrauben so eingestellt, daß sich die Meßrolle in einer horizontalen Position befindet. Jeder Meßrolle sind zwei Kraftmeßglieder zugeordnet, die an je einer Meßschwinge und einem Höhenkorrekturarm vorgesehen sind. Die Höhenkorrekturschrauben stellen gleichzeitig eine Abhebesicherung dar. Der Aufbau der Meßzonen dieses bekannten Schlingenhebers erfordert es, der Meßrolle einen Freiheitsgrad in der horizontalen Ebene zu geben. Dies wird durch eine fliegende Lagerung mittels Pendelrollenlagem erreicht, die je auf einer Achse der Meßschwingen angeordnet sind.

Die beiden die Meßrolle tragende Meßschwingen-Platten besitzen in Querrichtung nur eine geringe Steifigkeit, so daß ein entsprechend großer Freiraum zwischen den einzelnen Meßzonen bzw. Meßschwingen Plattenpaaren eingehalten werden muß,um ein gegenseitiges Berühren zu vermeiden. Aufgrund der geringen Steifigkeit der Meßschwingen-Platten und der fliegenden Lagerung der Meßrolle besteht die Gefahr, daß die Meßrollen des Schlingenhebers bei außermittiger Belastung aus der Horizontalen ausgelenkt werden und dadurch das Walzband mit der einseitig angehobenen Rollenkante beschädigen. Durch eine solche Schiefstellung der Meßrolle kann es außerdem zu einer Berührung mit der Meßschwinge und damit zu Beschädigungen kommen. Hierbei sind vorrangig auch die Schmierzuleitungen zu den Meßrollenlagern gefährdet, was einen Ausfall der Lagerfunktion nach sich ziehen würde. Schließlich führt die beim Berühren der Meßschwinge durch die Meßrolle entstehende Reibung zu einer Verfälschung der Messung. Abgesehen davon besitzt dieser Schlingenheber sehr viel Einzelteile, die zudem drehbar gelagert sind und folglich eine aufwendige Schmierung benötigen. Weiterhin müssen die Meßrollen nicht nur zeitraubend über sehr viele Konter- und Einstellschrauben ausgerichtet werden, sondern auch sehr häufig nachgestellt werden, weil sie sich durch die äußeren Belastungen und Vibrationen lockem bzw. lösen.

Der Erfindung liegt die Aufgabe zugrunde, eine gattungsgemäße Planheitsmeßrolle zu schaffen, die die beschriebenen Nachteile nicht aufweist und insbesondere konstruktiv einfacher gestaltet ist sowie eine höhere Steifigkeit der einzelnen Hebelrahmen besitzt.

Diese Aufgabe wird erfindungsgemäß dadurch gelöst, daß jeweils der Drehpunkt eines Hebelrahmens, der Drehpunkt der dazugehörigen Meßrolle und ein Krafteinleitungspunkt der unterhalb des Drehpunktes des Hebelrahmens angeordneten Kraftmeßeinrichtung ein annähernd gleichschenkliges Dreieck bilden. Da diese drei Punkte erfindungsgemäß durch einen Rahmen miteinander verbunden sind, wobei die Verbindung zwischen den Punkten auf Zug bzw. auf Druck belastet wird, läßt sich eine optimale Steifigkeit und durch den großen Hebelarm vom Drehpunkt der Meßrolle zum Drehgelenk bzw. -punkt des Hebelrahmens eine optimale Wirksamkeit bei der Krafteinleitung erreichen. Hierbei läßt sich eine Anordnung der Kraftmeßeinrichtung senkrecht auf der Verbindungslinie des Drehpunktes des Hebelrahmens zum Krafteinleitungspunkt erreichen und damit der Bandzug in vorteilhafter Weise als Druckkraft - und nicht wie bei dem bekannten Schlingenheber über eine Zugkraft - auf die Kraftmeßeinrichtung übertragen. Zudem ist - ausgenommen die Lagerung der Meßrollen - lediglich noch ein Gelenk vorhanden, nämlich im Bereich des Gelenk- bzw. Drehpunktes für die Hebelrahmen an der Welle, so daß die für eine Bandzugregelung aufgrund von Fertigungstoleranzen unvermeidlichen Spiele sehr viel kleiner als herkömmlich sind.

Wenn vorteilhaft außerhalb des von den Drehpunkten und dem Krafteinleitungspunkt gebildeten Dreiecks für jeden Hebelrahmen bzw. für jedes Hebelrahmensegment ein Abhebeschutz angeordnet ist, wird sichergestellt, daß der Hebelrahmen zwar im Uhrzeigersinn, nicht jedoch gegen den Uhrzeigersinn verdrehbar ist. Der Abhebeschutz kann beispielsweise aus einem durch ein Durchgangsloch des Hebelrahmens und in eine fluchtende Bohrung in einem Ansatz der Welle gesteckten Bolzen bestehen, wobei der Schraubenkopf hebelrahmenseitig etwas Luft (z.B. 0,1 bis 0,3 mm) zu dem Hebelrahmen aufweisen kann, wenn dieser unter dem Bandzug im Uhrzeigersinn verschwenkt wird; alternativ könnte beispielsweise eine vorgespannte Schraube den gleichen Zweck erfüllen, nämlich eine Bewegung im Uhrzeigersinn zuzulassen und eine Bewegung entgegen dem Uhrzeigersinn verhindern. Der modulare Aufbau der erfindungsgemäßen Planheitsmeßrolle erlaubt es, durch Lösen des unterhalb des Hebelrahmens frei zugänglichen Abhebeschutzes einen oder mehrere beliebige Hebelrahmen entgegen dem Uhrzeigersinn nach oben hin aus dem Schlingenheber in eine frei zugängliche Lage herauszubewegen. Dadurch ist es möglich, eine einzelne Meßrolle oder ein ganzes Hebelrahmensegment bzw. eine einzelne Kraftmeßeinrichtung auszutauschen, ohne die gesamte Planheitsmeßrolle ausbauen zu müssen.

Weitere Einzelheiten und Vorteile der Erfindung ergeben sich aus den Ansprüchen und der nachfolgenden Beschreibung, in der ein Ausführungsbeispiel des Gegenstandes der Erfindung dargestellt ist. Es zeigen:
- Fig. 1: in der Draufsicht als Teilschnitt eine aus mehreren Hebelrahmen-Segmenten zusammengesetzte Planheitsmeßrolle;
- Fig. 2: in der Draufsicht als Einzelheit ein Hebelrahmen-Segment; und
- Fig. 3: das Hebelrahmen-Segment gemäß Fig. 2 in der Seitenansicht.

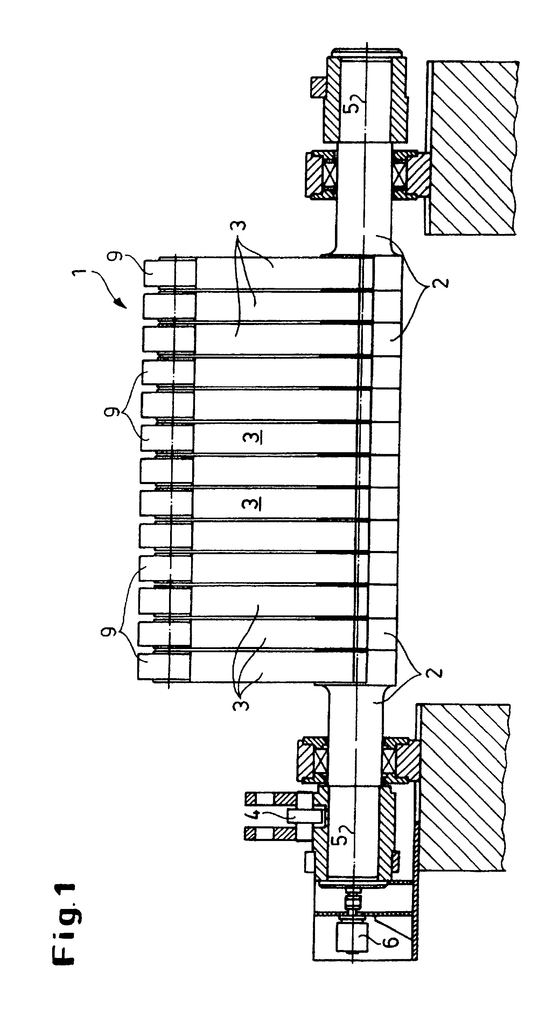

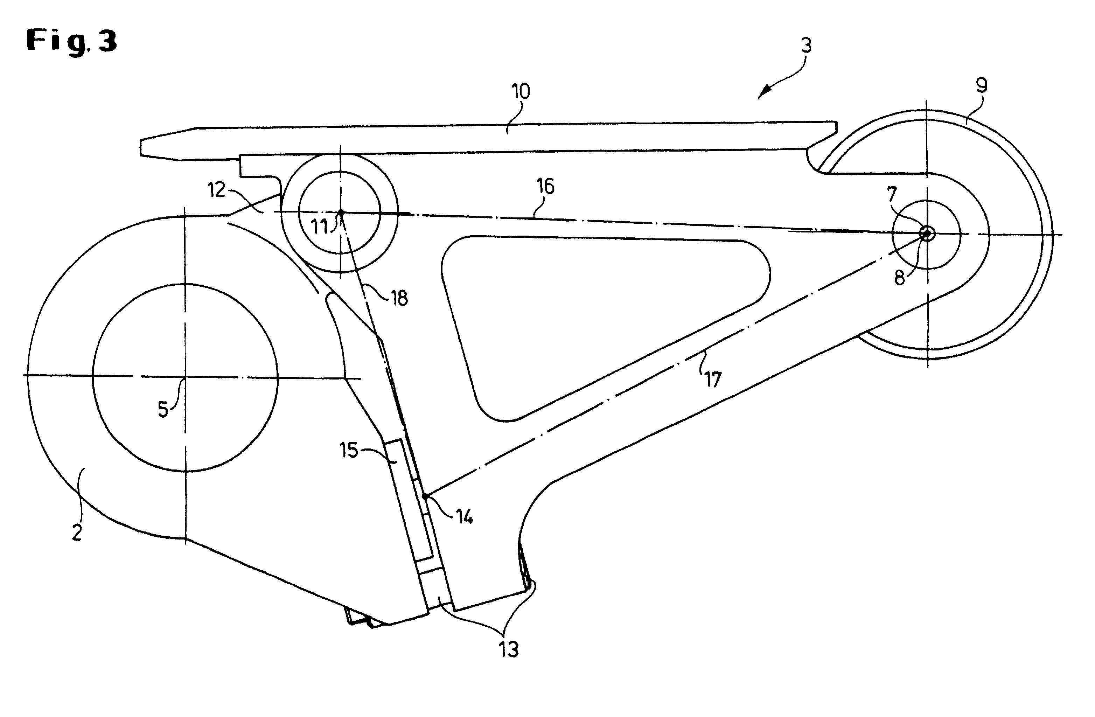

Ein beispielsweise auslaufseitig hinter einem Walzgerüst eines Bandwalzwerkes angeordneter Schlingenheber in Form einer Planheitsmeßrolle 1 weist gemäß Fig. 1 auf einer gemeinsamen, als Hohlwelle (vgl. Fig. 3) ausgebildeten Welle 2 mehrere eng an eng angeordnete Hebelrahmen bzw. Hebelrahmen-Segmente 3 auf. An das in Fig. 1 linke Ende der Welle 2 greift eine Kolbenstange 4 eines Anstellzylinders an, so daß sich die Hebelrahmen 3 über die Schwenkachse 5 der Welle 2 gemeinsam anstellen, d.h. in den Bandlauf eines nicht dargestellten Walzbandes einschwenken lassen. Mittels eines an die Schwenkachse 5 bzw. die Welle 2 angeschlossenen Drehgebers 6 läßt sich die Stellgröße der Anstellung der Planheitsmeßrolle bzw. des Schlingenhebers 1 ermitteln.

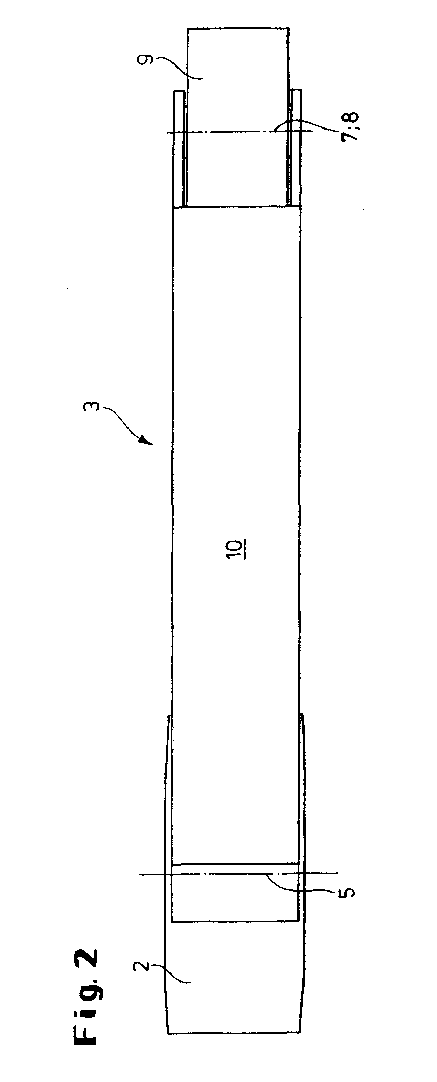

Wie sich näher den Fig. 2 und 3 entnehmen läßt, sind die Hebelrahmen 3 in quasi einer Hohlkasten-Bauweise ausgeführt, was ihnen eine hohe Steifigkeit gibt. Jeder Hebelrahmen 3 trägt an seinem vorderen, von der Welle 2 entfernten Ende eine mit einer durchgehenden Lagerachse 7 gelagerte, um den Drehpunkt 8 drehbare Meßrolle 9. Eine mit der Rahmenoberseite verschraubte Leitplatte 10 dient als Verschleißelement für das darüber hinweggleitende Walzband. Die Hebelrahmen 3 sind über jeweils einen Drehpunkt 11 in Form eines Drehgelenkes auf einem nockenartigen Ansatz 12 der Welle 2 angeordnet Hierbei wird durch einen Abhebeschutz 13 sichergestellt, daß der Hebelrahmen 3 zwar eine Drehung im Uhrzeigersinn, jedoch nicht gegen den Uhrzeigersinn machen kann. Oberhalb des Abhebeschutzes 13 ist ein Krafteinleitungspunkt 14 vorgesehen, dem eine Kraftmeßeinrichtung 15 der Welle 2 zugeordnet ist.

Die Hebelrahmen 3 besitzen als integrierte Bestandteile somit neben dem Drehpunkt 11 zur Schwenkbewegung bei auftretendem Bandzug außer dem den Drehpunkt 8 der Meßrolle 9 und den Krafteinleitungspunkt 14, wobei die diese Punkte miteinander verbindenden Linien 16 bis 18 (vgl. Fig. 3) ein annähernd gleichschenkliges Dreieck bilden. Hierbei wird durch den großen Hebelarm gemäß der Verbindungslinie 16, d.h. zwischen dem Drehpunkt 11 des Hebelrahmens 3 und dem Drehpunkt 8 der Meßrolle 9 eine optimale Wirksamkeit bei der Übertragung der an der Meßrolle 9 auftretenden Bandzugkräfte auf die Kraftmeßeinrichtung 15 erreicht.

Der außerhalb des von den Drehpunkten 7, 11 bzw. dem Krafteinleitungspunkt 15 liegende Abhebeschutz 13 ermöglicht es in einfacher Weise, trotz der sehr kompakten, aus einzelnen modularen Hebelrahmen von großer Steifigkeit bestehenden Planheitsmeßrolle bzw. Schlingenheber 1 einen beliebigen Hebelrahmen zwecks Komplett-Austauschs oder Austauschs lediglich der Meßrolle 9 frei zugänglich zu machen. Denn nach dem Lösen des Abhebeschutzes 13 läßt sich der gewünschte Hebelrahmen 3 entgegen dem Uhrzeigersinn, d.h. nach oben hin aus der Anordnung gemäß Fig. 1 heraus um den Drehpunkt 11 ausschwenken. Es braucht folglich nicht die gesamte Planheitsmeßrolle bzw. der Schlingenheber 1 ausgebaut zu werden.

## Patentansprüche

1. Planheitsmeßrolle (1), ausgebildet als ein gegen ein Walzband anstellbarer Schlingenheber mit mehreren, über die Breite des Walzbandes nebeneinanderliegenden Meßzonen, bestehend jeweils aus einer im Uhrzeigersinn verschwenkbaren, mit einer Kraftmeßeinrichtung (15) zusammenwirkenden, drehbar gelagerten Meßrolle (9), wobei jede Meßrolle (9) in einem veschwenkbaren, gehäuseartigen Hebelrahmen (3) gelagert ist,
**dadurch gekennzeichnet,**
**daß** jeweils der Drehpunkt (11) eines Hebelrahmens (3), der Drehpunkt (8) der Meßrolle (9) und ein Krafteinleitungspunkt (14) der unterhalb des Drehpunktes (11) des Hebelrahmens (3) angeordneten Kraftmeßeinrichtung (15) ein annähernd gleichschenkliges Dreieck bilden.

2. Planheitsmeßrolle nach Anspruch 2,
**gekennzeichnet durch**
einen außerhalb des von den Drehpunkten (7, 11) bzw. dem Krafteinleitungspunkt (14) gebildeten Dreiecks angeordneten Abhebeschutz (13).

## Claims

1. Planarity measuring roller (1), which is constructed as a loop lifter, which is placeable against a rolled strip, with several measuring zones, which are disposed adjacent to one another over the width of the rolled strip and which each consist of a respective rotatably mounted measuring roller (9) pivotable in clockwise sense and cooperating with a force measuring device (15), wherein each measuring roller (9) is mounted in a pivotable, housing-like lever frame (3), **characterised in that** in each instance the fulcrum (11) of a lever frame (3), the fulcrum (8) of the measuring roller (9) and a force introduction point (14) of the force measuring device (15) arranged below the fulcrum (11) of the lever frame (3) form an approximately equilateral triangle.

2. Planarity measuring roller according to claim 1, **characterised by** protection means (13), which is arranged outside the triangle formed by the fulcra (7, 11) and the force introduction point (14), against lifting off.

## Revendications

1. Rouleau de mesure (1) de la planéité, exécuté sous forme d'un releveur de boucles pouvant être placé contre une bande laminée, comprenant plusieurs zones de mesure placées l'une à côté de l'autre sur la largeur de la bande laminée, constituées à chaque fois d'un rouleau de mesure (9) pouvant être pivoté dans le sens des aiguilles d'une montre, interagissant avec un dispositif (15) de mesure de la force, logé de manière à pouvoir tourner, chaque rouleau de mesure (9) étant logé dans un cadre (3) de levier pouvant pivoter, de type bâti, **caractérisé en ce que** le point de rotation (11) d'un cadre (3) de levier, le point de rotation (8) du rouleau de mesure (9) et un point d'introduction de la force (14) du dispositif (15) de mesure de la force disposé sous le point de rotation (11) du cadre (3) de levier forment à chaque fois un triangle environ isocèle.

2. Rouleau de mesure de la planéité selon la revendication 1, **caractérisé par** une protection (13) contre le soulèvement disposée à l'extérieur du triangle formé par les points de rotation (7, 11) ou le point d'introduction (14) de la force.
